# EUROPEAN PATENT SPECIFICATION

(11) **EP 4 273 340 B1**
(45) Date of publication and mention of the grant of the patent: **20.05.2026**
(21) Application number: 21914749.3
(22) Date of filing: 23.12.2021
(51) Int. Cl.: E04B 1/86, E04B 1/82, E04B 9/04, E04B 1/99, B32B 3/10, G10K 11/168

(54) **ACOUSTIC SUSPENDED CEILING**
AKUSTISCHE ABGEHÄNGTE DECKE
FAUX TOIT ACOUSTIQUE

(30) Priority: 04.01.2021 ES 202130006 U
(43) Date of publication of application: 08.11.2023
(73) Proprietor: Aplicaciones Técnicas Del Cemento, S.L., 03600 Elda Alicante (ES); Eustaquio Cantó Cano, S.L., 03400 Villena (Alicante) (ES)
(72) Inventor: AMAT GUARINOS, Tomás, 03600 Elda (Alicante) (ES); BELDA HERNANDEZ, Pablo, 03600 Elda (Alicante) (ES)
(74) Representative: Capitán García, Maria Nuria
(86) International application number: PCT/ES2021/070928
(87) International publication number: WO 2022/144479

(56) References cited:
- EP-A1- 2 990 557
- CA-A- 531 798
- CA-A1- 2 285 502
- CA-A1- 2 285 502
- ES-U- 1 068 355
- ES-U- 1 182 059
- ES-U- 296 567
- JP-U- S6 042 839
- US-A- 1 926 509
- US-A- 1 926 509
- US-A1- 2012 155 688
- US-A1- 2012 155 688

## Description

### TECHNICAL FIELD OF THE INVENTION

The invention, as expressed in the title of the present specification, refers to an acoustic false ceiling that provides its intended function with advantages and characteristics, which are described in detail later, which imply an improvement in the current state of the art.

More specifically, the object of the invention focuses on a false ceiling system that, formed from multilayer tiles, made from the union of various layers of material with different specific features in terms of dimension and perforation densities, specifically a lower visible one, an intermediate acoustic insulating and absorbing one, and another upper concealed reinforcement one, has the purpose of improving the acoustic reverberation time of the room in which it is installed, that is, the persistence of sound in said room, while at the same time It serves as an acoustic insulator, providing advantages over other currently known systems for the same purpose.

The field of application of the present invention falls within the sector of the industry dedicated to construction, focusing particularly on the scope of false ceiling manufacturing and installation, while at the same time covering acoustic reverberation control systems.

### BACKGROUND OF THE INVENTION

As a reference to the current state of the art, it should be noted that, although different types and models of false ceilings are known, some of which are designed as thermal and/or acoustic insulators, at least the applicant is not aware of any having the same or similar technical and structural characteristics as those specifically presented by the one claimed here, and whose object is to provide a false ceiling system to improve the effects of acoustic reverberation produced by sound waves, for example in rooms intended for recording, but without discarding any other.

US1926509A represents a sound absorbing panel from the prior art.

### DESCRIPTION OF THE INVENTION

The acoustic false ceiling that the invention proposes is an improved alternative to what is already known, the characterising details that make it possible and that distinguish it being conveniently included in the final claims that accompany this description.

What the invention proposes, as previously noted, is a false ceiling system that, formed from multilayer tiles, formed by the union of various layers of material with different specific features in terms of dimension and perforation densities, aims to improve the reverberation time of the room in which it is installed, that is, the persistence of sound in said room, while serving as acoustic insulation, providing advantages over currently known systems for the same purpose.

Specifically, each of the multilayer tiles of the false ceiling that is the object of the invention comprises at least three layers: a lower visible layer made up of a thin sheet of cork; an intermediate layer that is thicker than the others, made up of a panel of acoustic insulating and absorbing material; and an upper concealed reinforcement layer, made up of a wooden plate with holes made therein; the intermediate layer being made up of a panel of heat-treated expanded cork.

More specifically, the lower visible layer is preferably made up of a cork sheet with a constant thickness of 2 to 6 mm. The type of cork and its finish can vary from one model to another (natural, heat-treated, etc.) as convenient or preferred, but it will always be a sheet of cork. Optionally, said layer can be made up of a sheet of natural cork with cavities, or of an irregular crushed cork agglomerate of variable dimensions, which generates cavities between the different grains, or a cork sheet with circular perforations (in different densities, shapes and sizes), in such a way that, depending on said perforations or cavities, the degree of absorption of each of the different models of the acoustic false ceiling system of the invention is defined. The perforations facilitate the penetration and subsequent breaking of the sound wave, for the acoustic absorption of the tile, since they allow sound to pass through said perforations, which will be partly absorbed by the intermediate layer and dissipated by the "plenum" space (distance between the false ceiling and the slab).

Thus, the false ceiling can present different models of this lower layer cork sheet with a different number of perforations to increase the perforated surface depending on the acoustic needs.

On the other hand, the intermediate acoustic insulating and absorbing layer that is made up of an insulating panel of heat-treated expanded cork, which is permeable to air, and which has a thickness of 20 mm. In the case in which the first layer or lower visible layer is a perforated sheet to increase sound insulation, absorption and reverberation control, this second layer is seen through said perforations.

Alternatively, instead of an expanded cork panel, the intermediate layer is a coconut fibre panel, which also has insulating and reverberation control capacity and is permeable to sound waves. The thickness may vary from one model to another depending on the desired absorption.

And, finally, the upper concealed reinforcement layer, preferably, which is made up of a 6-mm thick plywood plate, and in which a series of holes with variable size and density have been made, which mainly serves to give sufficient rigidity to the tiles of the false ceiling, and allow the sound waves that cross said layer to dissipate through the "plenum" space (the air chamber left between our system and the slab).

This upper layer will be in contact with the support structure of the false ceiling tiles being described.

To avoid the situation of reverberation, absorbing elements must be placed to correct the rebound effect. The multilayer false ceiling of the present invention, composed of the lower, intermediate and upper layers described, fully achieves this object. The simplest thing is to take advantage of the suspended ceiling, since with the help of the "plenum" space, (distance from our false ceiling to the slab), the sound wave can be broken and with a good material a large part of the noise can be absorbed.

The thicknesses of the layers are always the same and constant throughout the thickness of the false ceiling tiles being described. Alternatively, there may be variations in the thickness of each layer in the different models, but always constant in each of them.

This false ceiling system has several advantages over the range of false ceilings on the market, which make it different.

In the first place, there is currently no false ceiling with cork optics on the market, such as the one proposed. There are composites or crushed cork agglomerates, but not composed of several layers that make it efficient against the problem of acoustic absorption and the reverberation phenomenon.

Another of its advantages is that all the materials that make up the false ceiling are ecological and thus contribute to sustainability and care for the environment. The product is 100 % recyclable.

On the other hand, its composition facilitates the passage of sound through the three layers that form it, the lower one is capable, through the perforations, of breaking the sound waves, the intermediate one is in charge of absorption and the sound waves that travel through these two layers and after passing through the upper one, which is also perforated, can reach the chamber between the false ceiling and the slab, where the sound will be almost completely attenuated.

In addition, in the event that there is no air chamber between the false ceiling and the upper slab, due to the properties of the material used in the intermediate layer (heat-treated expanded cork, or alternatively coconut fibre) it will also attenuate the sound and reduce the reverberation.

The cork false ceiling, object of the invention, can be coupled to several of the existing fastening systems, since the plates are simply screwed onto a reticular substructure (of any type) that is arranged under the slab. It can even be screwed directly onto the slab.

Due to the fastening system, the perception of the false ceiling is that of a continuous ceiling, without visible profiles.

Finally, it should be noted that, preferably, the lower visible layer is treated with a fire-retardant material, giving it retardant properties against a possible fire, making it suitable for installation in any project, whether public or private.

Its practically zero expansion, and the easy cutting of the pieces, make it viable for installation by those without prior training.

### BRIEF DESCRIPTION OF THE DRAWINGS

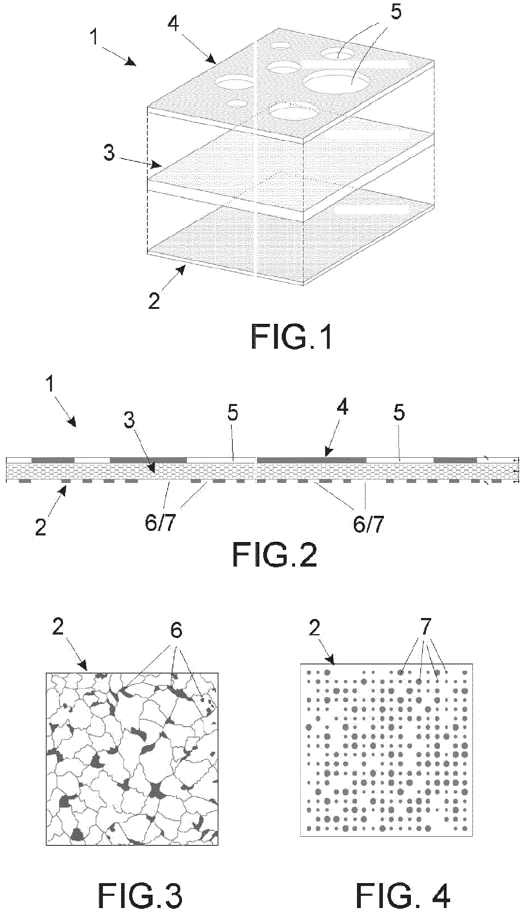

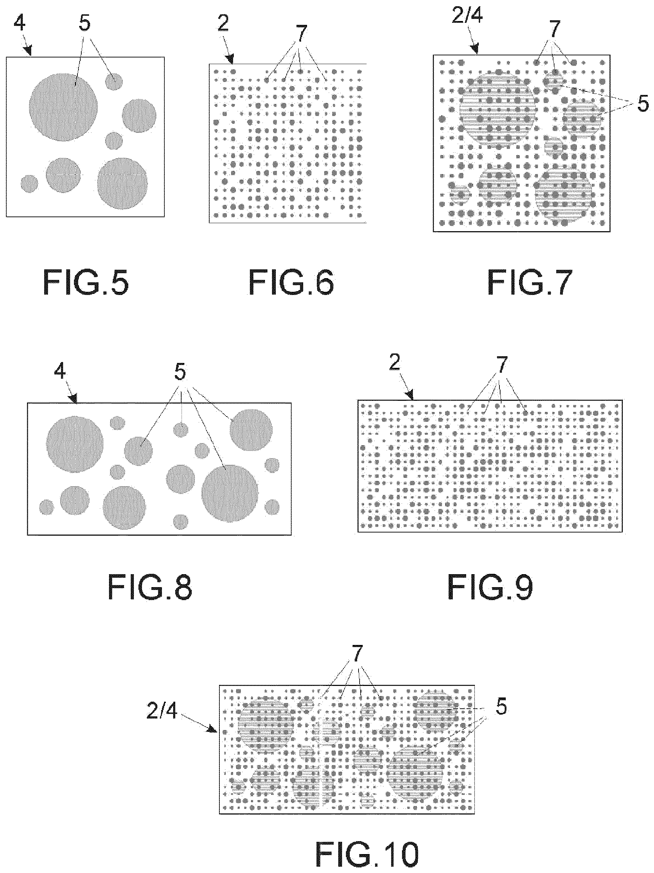

In order to complete the description being made and to aid a better understanding of the characteristics of the invention, the present specification is accompanied, as an integral part thereof, by a set of drawings in which by way of illustration and in a non-limiting manner, represent the following:
Figure number 1.- Shows a schematic perspective view of an example of the different layers comprised by each of the tiles that make up the acoustic false ceiling object of the invention, represented in an exploded view, appreciating the configuration and arrangement of each one of them.
Figure number 2.- Shows a schematic sectional view of another example of the false ceiling tile, according to the invention, in this case once its layers have been joined together.
Figures number 3 and 4.- Show respective plan views of two possible examples of the cork sheet that makes up the lower visible layer of the false ceiling tile, specifically, an example of natural cork in Figure 3 and an example of perforated cork in the case of Figure 4.
Figures number 5 and 6.- Show respective plan views of an example of the wooden plate that makes up the upper reinforcement layer and an example of the cork sheet that makes up the lower visible layer.
Figure number 7- Shows the overlapping of the pieces of Figures 5 and 6 that make up the respective upper and lower layers of the tile, in an example thereof being square in shape.
Figures number 8 and 9.- Show, respectively, a plan view of another example of the wooden plate that makes up the upper reinforcement layer and of the cork sheet that makes up the lower visible layer, in this case consisting of pieces being rectangular in shape.
And Figure number 10.- Shows the overlapping of the pieces represented in Figures 8 and 9.

### DETAILED DESCRIPTION OF THE INVENTION

In view of the aforementioned figures, and in accordance with the numbering adopted, several examples of non-limiting embodiments of the acoustic false ceiling of the invention can be seen, acoustic false ceiling which comprises what is indicated and described in detail below.

Thus, as can be seen in said figures, the false ceiling of the invention is made from multilayer tiles (1), that is, made up of various layers joined together, each of which comprises at least: a lower visible layer (2), made up of a cork sheet; an intermediate layer (3) thicker than the others, made up of a panel of acoustic insulating and absorbing material; and an upper concealed reinforcement layer (4), made up of a wooden plate with holes (5) made therein; the intermediate acoustic insulating and absorbing layer (3) is made up of a heat-treated expanded cork panel.

Preferably, the lower visible layer (2) is made up of a cork sheet with a constant thickness of 2 to 6 mm.

Optionally, the lower visible layer (2) is made up of a sheet of natural cork with cavities (6) typical of the material (as seen in Figure 3), or by an irregular crushed cork agglomerate of variable dimensions, which generates cavities (6) between the different grains, or a cork sheet with multiple perforations (7) that can be made in different densities, shapes and sizes, in such a way that, depending on the said perforations (7) or cavities (6), the degree of absorption of the acoustic false ceiling of the invention is defined. Preferably, the lower visible layer (2), when it is a cork sheet with perforations (7), has a multitude of small-diameter circular perforations (7), as can be seen in Figure 4, since through them the intermediate layer (3) can be seen.

The intermediate acoustic insulating and absorbing layer (3) is made up of a panel of heat-treated expanded cork which, preferably, has a thickness of 20 mm.

Alternatively, the intermediate layer (3) is made up of a coconut fibre panel.

Preferably, the upper concealed reinforcement layer (4) is made up of a 6-mm thick plywood plate, with various holes (5) that can be variable in size, shape and density, a possible example being the holes (5) presented by the pieces of said layer (4) shown in Figures 5 and 8.

In any case, preferably, the lower visible layer (2) is treated with a fire-retardant material.

Considering Figures 5 to 7, it can be seen how, in one embodiment, the pieces that form the different layers of the tiles (1) of the false ceiling are square in shape, preferably 60 X 60 cm. And, in another embodiment, as shown in Figures 8 to 10, they are rectangular in shape, preferably 120 X 60 cm. In addition, in both cases, the total thickness of the tiles (1) is preferably 30 mm.

Figures 7 and 10 show the overlapping of the lower (2) and upper (4) layers of the respective examples noted above, appreciating the arrangement of the perforations (7) of one with the holes (5) of the other, although it must be understood that the intermediate layer (3) will be incorporated between the two layers.

## Claims

1. Acoustic false ceiling that, applicable to improve the reverberation time of the room in which it is installed, that is, the persistence of sound in the said room, while serving as acoustic insulation, and made from multilayer tiles (1), that is, made up of various layers joined together, wherein each of said tiles (1) comprises, at least: a lower visible layer (2), made up of a cork sheet; an intermediate layer (3) thicker than the others, made up of a panel of acoustic insulating and absorbing material; and an upper concealed reinforcement layer (4), made up of a wooden plate with holes (5) made therein; the intermediate acoustic insulating and absorbing layer (3) is made up of a panel of heat-treated expanded cork or of coconut fibre.

2. Acoustic false ceiling, according to claim 1, **characterised in that** the lower visible layer (2) is made up of a cork sheet with a constant thickness of 2 to 6 mm.

3. Acoustic false ceiling, according to claim 1 or 2, **characterised in that** the lower visible layer (2) is made up of a natural cork sheet with cavities (6) typical of the material.

4. Acoustic false ceiling, according to claim 1 or 2, **characterised in that** the lower visible layer (2) is made up of an irregular crushed cork agglomerate of variable dimensions, which generates cavities (6) between the different grains.

5. Acoustic false ceiling, according to claim 1 or 2, **characterised in that** the lower visible layer (2) is formed as a cork sheet with multiple perforations (7) made in it with variable densities, shapes and sizes.

6. Acoustic false ceiling, according to any of the preceding claims, **characterised in that** the intermediate layer (3) has a thickness of 20 mm.

7. Acoustic false ceiling, according to any of the preceding claims, **characterised in that** the upper concealed reinforcement layer (4) is made up of a 6-mm thick plywood plate, with various holes (5) with variable sizes, shapes and densities.

8. Acoustic false ceiling, according to any of the preceding claims, **characterised in that** the lower visible layer (2) is treated with a fire-retardant material.

## Patentansprüche

1. Abgehängte Akustikdecke, geeignet zur Verbesserung der Nachhallzeit des Raumes, in dem sie installiert ist, das heißt der Persistenz des Schalls in dem genannten Raum, und gleichzeitig als Schalldämmung dienend, hergestellt aus mehrschichtigen Platten (1), das heißt aus mehreren miteinander verbundenen Schichten bestehend, wobei jede dieser Platten (1) zumindest umfasst: eine untere sichtbare Schicht (2), bestehend aus einer Korkplatte; eine Zwischenschicht (3), dicker als die übrigen, bestehend aus einer Platte aus schalldämmendem und schallabsorbierendem Material; und eine obere verborgene Verstärkungsschicht (4), bestehend aus einer Holzplatte mit darin ausgebildeten Öffnungen (5); wobei die schalldämmende und schallabsorbierende Zwischenschicht (3) aus einer Platte aus wärmebehandeltem expandiertem Kork oder aus Kokosfasern besteht.

2. Abgehängte Akustikdecke nach Anspruch 1, **dadurch gekennzeichnet, dass** die untere sichtbare Schicht (2) aus einer Korkplatte mit einer konstanten Dicke von 2 bis 6 mm besteht.

3. Abgehängte Akustikdecke nach Anspruch 1 oder 2, **dadurch gekennzeichnet, dass** die untere sichtbare Schicht (2) aus einer natürlichen Korkplatte mit materialtypischen Hohlräumen (6) besteht.

4. Abgehängte Akustikdecke nach Anspruch 1 oder 2, **dadurch gekennzeichnet, dass** die untere sichtbare Schicht (2) aus einem unregelmäßigen Korkagglomerat aus zerkleinertem Kork mit variablen Abmessungen besteht, wodurch Hohlräume (6) zwischen den einzelnen Partikeln entstehen.

5. Abgehängte Akustikdecke nach Anspruch 1 oder 2, **dadurch gekennzeichnet, dass** die untere sichtbare Schicht (2) als Korkplatte mit mehreren darin ausgebildeten Perforationen (7) mit variabler Dichte, Form und Größe ausgebildet ist.

6. Abgehängte Akustikdecke nach einem der vorhergehenden Ansprüche, **dadurch gekennzeichnet, dass** die Zwischenschicht (3) eine Dicke von 20 mm aufweist.

7. Abgehängte Akustikdecke nach einem der vorhergehenden Ansprüche, **dadurch gekennzeichnet, dass** die obere verborgene Verstärkungsschicht (4) aus einer Sperrholzplatte mit einer Dicke von 6 mm besteht, mit mehreren Öffnungen (5) unterschiedlicher Größe, Form und Dichte.

8. Abgehängte Akustikdecke nach einem der vorhergehenden Ansprüche, **dadurch gekennzeichnet, dass** die untere sichtbare Schicht (2) mit einem flammhemmenden Material behandelt ist.

## Revendications

1. Faux-plafond acoustique destiné à améliorer le temps de réverbération de la pièce dans laquelle il est installé, c'est-à-dire la persistance du son dans ladite pièce, tout en servant d'isolation acoustique, et constitué de dalles multicouches (1), c'est-à-dire composées de différentes couches assemblées entre elles, où chacune desdites dalles (1) comprend au moins : une couche inférieure visible (2), constituée d'une plaque de liège ; une couche intermédiaire (3) plus épaisse que les autres, constituée d'un panneau de matériau isolant et absorbant acoustique ; et une couche supérieure de renfort dissimulée (4), constituée d'une plaque de bois où des trous ont été percés (5) ; la couche intermédiaire isolante et absorbante acoustique (3) est constituée d'un panneau de liège expansé traité thermiquement ou de fibre de coco.

2. Faux-plafond acoustique, selon la revendication 1, **caractérisé en ce que** la couche inférieure visible (2) est constituée d'une plaque de liège d'une épaisseur constante de 2 à 6 mm.

3. Faux-plafond acoustique, selon la revendication 1 ou 2, **caractérisé en ce que** la couche inférieure visible (2) est constituée d'une plaque de liège avec des cavités (6) typiques du matériau.

4. Faux-plafond acoustique, selon la revendication 1 ou 2, **caractérisé en ce que** la couche inférieure visible (2) est constituée d'un agglomérat de liège broyé de dimensions variables, générant des cavités (6) entre les différents grains.

5. Faux-plafond acoustique, selon la revendication 1 ou 2, **caractérisé en ce que** la couche inférieure visible (2) est constituée d'une plaque de liège comportant de multiples perforations (7) de densités, de formes et de tailles variables.

6. Faux plafond acoustique, selon l'une quelconque des revendications précédentes, **caractérisé en ce que** la couche intermédiaire (3) a une épaisseur de 20 mm.

7. Faux plafond acoustique, selon l'une quelconque des revendications précédentes, **caractérisé en ce que** la couche de renfort supérieure dissimulée (4) est constituée d'un panneau de contreplaqué de 6 mm d'épaisseur, comportant divers trous (5) de tailles, de formes et de densités variables.

8. Faux plafond acoustique, selon l'une quelconque des revendications précédentes, **caractérisé en ce que** la couche inférieure visible (2) est traitée à l'aide d'un matériau retardateur de feu.
